# EUROPÄISCHE PATENTANMELDUNG

(11) **EP 2 135 753 A2**
(43) Veröffentlichungstag der Anmeldung: **23.12.2009**
(21) Anmeldenummer: 09157912.8
(22) Anmeldetag: 15.04.2009
(51) Int. Cl.: B60C 13/00, B60C 15/024

(54) **Fahrzeugluftreifen mit Felgenschutzrippe**

(30) Priorität: 17.06.2008 DE 102008028780
(71) Anmelder: Continental Aktiengesellschaft, 30165 Hannover (DE)
(72) Erfinder: Behr, Ulrich, 30169, Hannover (DE); Fischer, Markus, 30823, Garbsen (DE); Nojek, Rafal, 30161, Hannover (DE)
(74) Vertreter: Finger, Karsten

(57) **Zusammenfassung**

Die Erfindung betrifft einen Fahrzeugluftreifen mit einem Laufstreifen (1), zwei Seitenwänden (6) und zwei Wulstbereichen (5), wobei axial außen (A) zumindest auf einer Reifenseitenwand (6) in Höhe oder oberhalb des Wulstbereiches (5) eine über den Umfang der Reifenseitenwand umlaufende Felgenschutzrippe (9) angeordnet ist.

Die Erfindung zeichnet sich dadurch aus, dass im Reifenquerschnitt betrachtet die Breite der Seitenwand (10) zumindest von der halben Querschnittshöhe (Qh) des Fahrzeugluftreifens bis zur Felgenschutzrippe (9) derart zunimmt, so dass die Felgenschutzrippe (9) in die Seitenwand (6) integriert ist und die Außenkonturen (11) von Seitenwand (6) und Felgenschutzrippe (9) miteinander fluchten und dass die Außenkontur (11) der Seitenwand (6) von einem oberen Ende (12) der Seitenwand bis zum unteren Ende (13) der Felgenschutzrippe konvex nach axial (A) außen und/oder gerade, aber nic konkav oder nach axial innen (1) verlaufend, ausgebildet.

## Beschreibung

Die Erfindung betrifft einen Fahrzeugluftreifen mit einem Laufstreifen, zwei Seitenwänden und zwei Wulstbereichen, wobei axial außen wenigstens auf einer Reifenseitenwand in Höhe des Wulstbereiches eine über den Umfang der Reifenseitenwand umlaufende Felgenschutzrippe angeordnet ist.

Felgenschutzrippen an Fahrzeugluftreifen sind im Stand der Technik bekannt. Die Felgenschutzrippe ist üblicherweise ein Keil aus Gummi, welcher einteilig mit der Seitenwand verbunden ist und auf der Seitenwand ringförmig über den Umfang dieser Seitenwand geschlossen umläuft. Die Felgenschutzrippe ragt dabei, wie auf die äußere Oberfläche der Seitenwand aufgesetzt, als Keil aus der Seitenwand nach axial außen heraus. Die Felgenschutzrippe ist in einer Reifenquerschnittshöhe auf der unteren Seitenwand in etwa in Höhe des Wulstbereiches derart angeordnet, dass diese bei einem auf das Rad aufgezogenen Reifen unmittelbar oberhalb des Felgenhornes verläuft und sich axial zumindest gleich weit wie das Felgenhorn oder axial über das Felgenhorn hinaus erstreckt, um das Felgenhorn und die Felge vor seitlichen Scheuerkontakten, wie beispielsweise Bordsteinkontakten, zu schützen, indem die Felgenschutzrippe diese Kontakte abfängt.

Es hat sich jedoch gezeigt, dass bei "aufgesetzten" Felgenschutzrippen Spannungsspitzen in der Seitenwand im Betrieb des Reifens auftreten. Durch diese ungleichmäßige Spannungsverteilung können sich kleine Brüche oder Risse insbesondere im Bereich des Überganges Felgenschutzrippe zur Seitenwand bilden, durch die die Haltbarkeit des Reifens herabgesetzt ist.

Es ist daher die Aufgabe der vorliegenden Erfindung, einen Fahrzeugluftreifen mit einer zuverlässig arbeitenden Felgenschutzrippe bereitzustellen, bei dem die Haltbarkeit des Reifens verbessert ist.

Die Aufgabe wird gelöst, indem, im Reifenquerschnitt betrachtet, die Breite der Seitenwand zumindest von der halben Querschnittshöhe des Fahrzeugluftreifens bis zur Felgenschutzrippe derart zunimmt, so dass die Felgenschutzrippe in die Seitenwand integriert ist und die Außenkonturen von Seitenwand und Felgenschutzrippe miteinander fluchten und dass die Außenkontur der Seitenwand von einem oberen Ende der Seitenwand bis zum unteren Ende der Felgenschutzrippe konvex und/oder gerade nach axial außen, aber nie konkav oder nach axial innen verlaufend, ausgebildet ist.

Erfindungswesentlich ist, dass die Felgenschutzrippe in die Seitenwand integriert und mit dieser mit ihren äußeren Oberflächen fluchtend ausgebildet ist und nicht mehr als ein nach axial außen überstehender Gummikeil unter einem bestimmten Winkel oder konkaven Radius auf die äußere Seitenwandoberfläche aufgesetzt ausgebildet ist. Sondern die Seitenwand weist oberhalb der Felgenschutzrippe eine größere Breite als im Stand der Technik auf. Durch diese sukzessive Verdickung der Seitenwand in Richtung Felgenschutzrippe zur Integration der Felgenschutzrippe in die Seitenwand ist die radiale Steifigkeit der Seitenwand verbessert, wodurch zusätzlich die Schutzwirkung durch die höhere Steifigkeit verbessert ist. Gemäß der Erfindung erstreckt sich die Außenkontur der Seitenwand von einem oberen Ende der Seitenwand bis zum unteren Ende der Felgenschutzrippe konvex und/oder gerade nach axial außen, aber nie konkav oder nach axial innen verlaufend. Durch diese erfindungsgemäße Seitenwandgestaltung mit entsprechender äußerer Kontur ist erreicht, dass Spannungsspitzen reduziert sind, wodurch zudem die Gefahr der Bildung von Rissen oder Brüchen im Gummimaterial im Bereich der Spannungsspitzen verringert ist. Zudem ist durch einen verringerten Luftwiderstand im Bereich der Seitenwand das während des Betriebes des Reifens entstehende Geräusch ebenfalls vorteilhaft reduziert.

Der Beschreibung des erfindungsgemäßen Reifens wird der nicht auf die Felge aufgezogene vulkanisierte Reifen zugrunde gelegt. Die Querschnittshöhe des Fahrzeugluftreifens bemisst sich von der äußeren Laufflächenoberfläche bis zur Querschnittshöhe des nominalen Felgendurchmessers.

Vorteilhaft ist es, wenn das untere Ende der Felgenschutzrippe der Punkt des Reifenquerschnittes ist, der am weitesten nach axial außen erstreckt ist. Hierdurch ist ein besonders guter Schutz der Felge durch die Felgenschutzrippe erreicht.

In einer bestimmten Ausführungsform kann die Kontur der Seitenaußenwand derart ausgebildet sein, dass diese wenigstens einen Radius aufweist und im Bereich der integrierten Felgenschutzrippe wenigstens eine Gerade aufweist. Die im Querschnitt als Geradenkontur ausgebildete Felgenschutzrippe kann entweder radial oder nach axial außen verlaufend sein. In anderen Ausführungsformen kann die Kontur im Bereich der Felgenschutzrippe dem selben Radius wie dem Seitenwandradius zugehören oder wenigstens einen anderen Radius aufweisen.

Vorteilhaft ist es, wenn das Seitenwanddekor und/oder die Seitenwandbeschriftung eine Aussparung in der verdickt ausgebildeten Seitenwand ist. Die Aussparung kann durch eine Gravur in den fertig vulkanisierten Reifen z.B. durch eine Lasergravur eingebracht sein. Die Aussparung kann aber auch durch eine entsprechend gestaltete Seitenwandschale der Vulkanisierform in den Reifenrohling während des Heizpressens eingebracht sein. Insbesondere ist es zweckmäßig, wenn die Buchstaben oder Zahlen der Seitenwandbeschriftung runde Kanten aufweisen, welche vom Beschriftungsgrund zur Flanke der Beschriftung konkav und/oder von der Flanke der Beschriftung zur Oberfläche der axial äußeren Reifenseitenwand konvex nach außen gerichtet sind. Hierdurch ist die Gefahr von Rissbildungen oder von Brüchen verringert, wodurch die Haltbarkeit des Reifens verbessert ist.

Weitere Merkmale, Vorteile und Einzelheiten der Erfindung werden anhand der Zeichnungen, die schematische Ausführungsbeispiele darstellen, näher erläutert. Es zeigen die
- Fig.1: einen Teil-Querschnitt des erfindungsgemäßen Fahrzeugluftreifens;
- Fig.2: eine Vergrößerung des Teil-Querschnittes der Fig.1 im Bereich der Seitenwandbeschriftung.

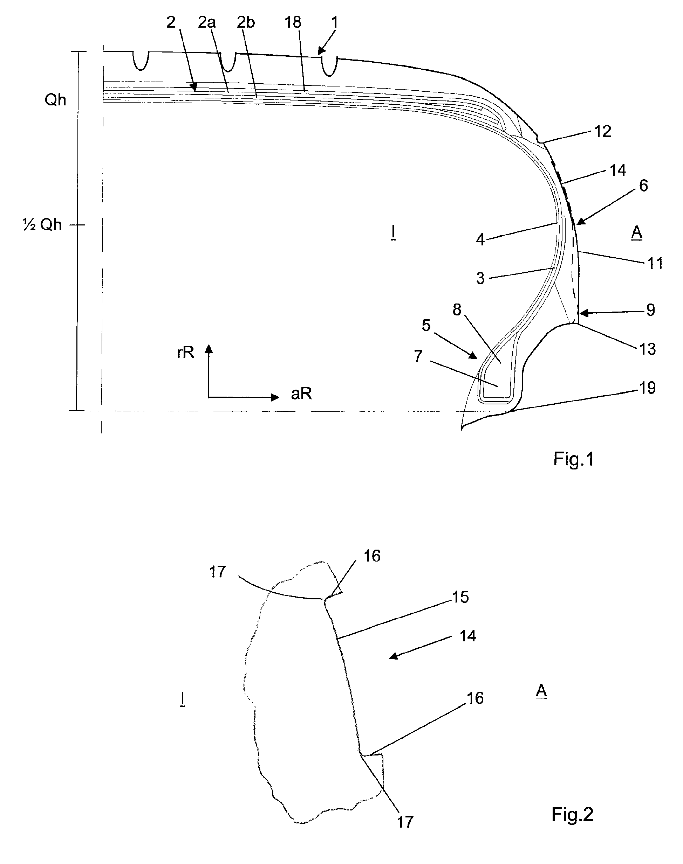

Die **Fig.1** zeigt einen Teil-Querschnitt durch einen Niederquerschnitts-Radialreifen für Personenkraftwagen, welcher einen profilierten Laufstreifen 1, einen aus zwei Lagen 2a, 2b, bestehenden Gürtel 2, welcher durch eine Bandage 18 abgedeckt ist, eine Radialkarkasse 3, eine luftdicht ausgeführte Innenschicht 4, Seitenwände 6 sowie Wulstbereiche 5 mit Wulstkernen 7 und Kemprofilen 8 aufweist. Die Lagen 2a, 2b des Gürtels 2 bestehen aus in eine Gummimischung eingebetteten Festigkeitsträgern aus Stahlcord, welche innerhalb jeder Lage parallel zueinander verlaufen, wobei die Stahlcorde der Lagen in kreuzender Anordnung zu den Stahlcorden der benachbarten Lage orientiert sind und mit der Reifenumfangsrichtung jeweils einen Winkel zwischen 15° und 36° einschließen. Axial außen A ist zumindest auf einer Reifenseitenwand 6 oberhalb des Wulstbereiches 5 eine über den Umfang der Reifenseitenwand 6 umlaufende Felgenschutzrippe 9 angeordnet. Die Felgenschutzrippe 9 ist in die Seitenwand 6 integriert. Die Breite 10 der Seitenwand 6 nimmt von zumindest von der halben Querschnittshöhe ½Qh des Fahrzeugluftreifens in Richtung Felgenschutzrippe 9 derart zu, so dass die Felgenschutzrippe 9 in die Seitenwand 6 integriert ist und die Außenkonturen 11 von Seitenwand 6 und Felgenschutzrippe 9 miteinander fluchten. Die Außenkontur 11 der Seitenwand ist von einem oberen Ende der Seitenwand 12 bis zum unteren Ende 13 der Felgenschutzrippe konvex nach axial außen A und/oder gerade, aber nie konkav oder nach axial innen I verlaufend, ausgebildet. Das untere Ende 13 der Felgenschutzrippe 9 ist der Punkt des Reifenquerschnittes, der am weitesten nach axial außen A erstreckt ist.

Die axial äußere Seitenwandkontur 11 wird -von dem oberen Seitenwandende 12 beginnend, durch einen Radius, welcher im Bereich der Felgenschutzrippe tangential in eine Gerade übergeht, welche entweder in der radialen Richtung verläuft oder aus der radialen Richtung rR nach axial außen weisend ist, gebildet.

In der **Fig.2** eine Vergrößerung des Teil-Querschnittes der Fig.1 im Bereich der Seitenwandbeschriftung dargestellt. Gleiche Bauteile sind in beiden Figuren mit gleichen Bezugszeichen gekennzeichnet. In der Seitenwand 6 sind das Seitenwanddekor 14 und die Seitenwandbeschriftung 14 als Gravur durch Laserverfahren eingebracht. Die Seitenwand 6 weist eine derartige Dicke auf, so dass eine Gravur gut einsetzbar ist. Die Buchstaben oder Zahlen der Seitenwandbeschriftung 14 weisen gerundete Kanten 17 in Form von Radien auf, welche vom Beschriftungsgrund 15 zur Flanke 16 der Beschriftung konkav ausgebildet sind. Der Übergang von der Flanke 16 der Beschriftung zur axial äußeren Reifenoberfläche ist in etwa eckig.

In der Fig.1 ist die Felgenschutzrippe aus dem Stand der Technik gestrichelt dargestellt. Der Übergang von Seitenwand zur von der auf die Seitenwand aufgesetzten Felgenschutzrippe gemäß des Standes der Technik erfolgt in einer konvex nach innen ausgebildeten Kontur.

### Bezugszeichenliste

### (Teil der Beschreibung)

- 1: Laufstreifen
- 2: Gürtel
- 3: Karkasse
- 4: Innenschicht
- 5: Wulstbereich
- 6: Seitenwand
- 7: Wulstkern
- 8: Kemreiter
- 9: Felgenschutzrippe
- 10: Breite der Seitenwand
- 11: Seitenwandkontur
- 12: oberes Ende der Seitenwand
- 13: unteres Ende der Seitenwand
- 14: Seitenwanddekor
- 15: Beschriftungsgrund
- 16: Beschriftungsflanke
- 17: gerundete Kante
- 18: Gürtelbandage
- 19: nominative Felgenbreite

- Qh: Querschnittshöhe des Reifens
- rR: radiale Richtung
- aR: axiale Richtung

## Patentansprüche

1. Fahrzeugluftreifen mit einem Laufstreifen (1), zwei Seitenwänden (6) und zwei Wulstbereichen (5), wobei axial außen (A) zumindest auf einer Reifenseitenwand (6) in Höhe oder oberhalb des Wulstbereiches (5) eine über den Umfang der Reifenseitenwand umlaufende Felgenschutzrippe (9) angeordnet ist,
**dadurch gekennzeichnet, dass**
im Reifenquerschnitt betrachtet die Breite der Seitenwand (10) zumindest von der halben Querschnittshöhe (Qh) des Fahrzeugluftreifens bis zur Felgenschutzrippe (9) derart zunimmt, so dass die Felgenschutzrippe (9) in die Seitenwand (6) integriert ist und die Außenkonturen (11) von Seitenwand (6) und Felgenschutzrippe (9) miteinander fluchten und
dass die Außenkontur (11) der Seitenwand (6) von einem oberen Ende (12) der Seitenwand bis zum unteren Ende (13) der Felgenschutzrippe konvex nach axial (A) außen und/oder gerade, aber nie konkav oder nach axial innen (I) verlaufend, ausgebildet ist.

2. Fahrzeugluftreifen nach Anspruch 1,
**dadurch gekennzeichnet, dass** das untere Ende (13) der Felgenschutzrippe der Punkt des Reifenquerschnittes ist, der am weitesten nach axial außen (A) erstreckt ist.

3. Fahrzeugluftreifen nach einem der vorangehenden Ansprüche,
**dadurch gekennzeichnet, dass** die axial äußere Kontur (11) der Seitenwand (6) wenigstens einen Radius und die axial äußere Kontur (11) der integrierten Felgenschutzrippe (9) wenigstens eine Gerade aufweist.

4. Fahrzeugluftreifen nach einem der Ansprüche 1 oder 2,
**dadurch gekennzeichnet, dass** die axial äußere Kontur (11) der Seitenwand (6) wenigstens einen Radius und die axial äußere Kontur (11) der integrierten Felgenschutzrippe (9) den selben Radius oder wenigstens einen weiteren Radius aufweist.

5. Fahrzeugluftreifen nach einem der vorangehenden Ansprüche,
**dadurch gekennzeichnet, dass** das Seitenwanddekor (14) und/oder die Seitenwandbeschriftung (14) eine Aussparung in der Seitenwand (6) ist.

6. Fahrzeugluftreifen nach einem Anspruch 5,
**dadurch gekennzeichnet, dass** die Buchstaben oder Zahlen der Seitenwandbeschriftung (14) runde Kanten aufweisen, welche vom Beschriftungsgrund (15) zur Flanke (16) der Beschriftung konkav und/ oder von der Flanke (16) zur Oberfläche der axial äußeren Reifenseitenwand konvex nach außen gerichtet sind.

7. Fahrzeugluftreifen nach einem Anspruch 5,
**dadurch gekennzeichnet, dass** die Aussparung eine Gravur, vorzugsweise eine Lasergravur ist.
